# EUROPEAN PATENT APPLICATION

(11) **EP 4 553 911 A1**
(43) Date of publication of application: **14.05.2025**
(21) Application number: 24198647.0
(22) Date of filing: 05.09.2024
(51) Int. Cl.: H01M 4/04

(54) **ALUMINUM BATTERY AND MANUFACTURING METHOD THEREOF**

(30) Priority: 10.11.2023 TW 112143358
(71) Applicant: APh ePower Co., Ltd., Kaohsiung City 821 (TW)
(72) Inventor: WU, Jui-Hsuan, 821 Kaohsiung City (TW); TSAI, Shih Po Ta, 821 Kaohsiung City (TW); CHEN, Wei-Ting, 821 Kaohsiung City (TW); CHEN, Kuan-Ting, 821 Kaohsiung City (TW); HUNG, Fei-Yi, 821 Kaohsiung City (TW)
(74) Representative: Becker, Eberhard

(57) **Abstract**

An aluminum battery includes a negative electrode structure (100). The negative electrode structure (100) includes a substrate (110) and an aluminum alloy layer (120) located on the substrate (110). The aluminum alloy layer (120) includes an aluminum element and a non-aluminum element. A content of the aluminum element in the aluminum alloy layer (120) is greater than or equal to 85wt% and less than 100wt%, while a content of the non-aluminum element in the aluminum alloy layer (120) is less than or equal to 15wt% and greater than 0wt%. A manufacturing method of the aluminum battery is also provided.

## Description

### BACKGROUND

### Technical Field

The disclosure relates to an aluminum battery and a manufacturing method thereof.

### Description of Related Art

Generally, an aluminum battery is composed of a positive electrode, a negative electrode, an isolation film, and an electrolyte, where a design of the negative electrode structure often significantly affects a performance of the aluminum battery. Therefore, how to design and manufacture a better negative electrode structure to enhance the product competitiveness of the aluminum battery is a challenge.

### SUMMARY

The disclosure is directed to an aluminum battery and a manufacturing method thereof, which has better product competitiveness.

The disclosure provides an aluminum battery includes a negative electrode structure. The negative electrode structure includes a substrate (aluminum foil or nickel foil) and an aluminum alloy layer located on the substrate. The aluminum alloy layer includes an aluminum element and a non-aluminum element. A content of the aluminum element in the aluminum alloy layer is greater than or equal to 85wt% and less than 100wt%, while a content of the non-aluminum element in the aluminum alloy layer is less than or equal to 15wt% and greater than 0wt%.

In an embodiment of the disclosure, the non-aluminum element includes silicon (Si), magnesium (Mg), nickel (Ni), copper (Cu), zinc (Zn) or combinations thereof.

In an embodiment of the disclosure, a thickness of the aluminum alloy layer ranges from 50 µm to 500 µm.

In an embodiment of the disclosure, the aluminum alloy layer is composed of solid alloy powder particles of the aluminum element and the non-aluminum element.

In an embodiment of the disclosure, an average particle size of the solid alloy powder particles ranges from 10 µm to 200 µm.

The disclosure provides a manufacturing method of an aluminum battery including: providing a substrate; performing a thermal spray process to spray alloy powder on the substrate to form an aluminum alloy layer and obtain a negative electrode structure of the aluminum battery.

In an embodiment of the disclosure, after performing the above thermal spray process, the alloy powder is melted and sintered and stacked on the substrate.

In an embodiment of the disclosure, a temperature range of the above thermal spray process is 1000°C to 2000°C, and the thermal spray process is performed for 10 seconds to 120 seconds.

In an embodiment of the disclosure, before performing the above thermal spray process, the method further includes performing a surface treatment process on the substrate.

Based on the above description, the disclosure uses the design of the aluminum alloy layer to control the aluminum element and the non-aluminum element within a corresponding weight ratio range. In this way, the alloy layer may effectively inhibit formation of an oxide layer on the negative electrode structure, such that the aluminum battery has better product competitiveness. In addition, the thermal spray process has fewer complicated steps and may effectively increase a film formation speed of aluminum alloy powder, and since a surface of the substrate is less heated during the film forming process, the thermal spray process is less likely to have adverse effects on the substrate. Therefore, the aluminum alloy layer formed by using the thermal spray process may simplify the process and shorten a process time, thereby saving costs and improving the quality of the negative electrode structure, and also making the aluminum battery to have excellent product competitiveness.

To make the aforementioned more comprehensible, several embodiments accompanied with drawings are described in detail as follows.

### BRIEF DESCRIPTION OF THE DRAWINGS

FIG. 1 is a schematic diagram of a negative electrode structure of an aluminum battery according to an embodiment of the disclosure.
FIG. 2 is a flowchart of a manufacturing method of an aluminum battery according to an embodiment of the disclosure.
FIG. 3 is a schematic diagram of a result of an embodiment 3 under an electron microscope.

### DESCRIPTION OF THE EMBODIMENTS

In the following detailed description, for the purpose of illustration rather than limitation, exemplary embodiments revealing specific details are elaborated to provide a thorough understanding of the various principles of the disclosure. However, it will be apparent to those skilled in the art that benefit from the disclosure, the disclosure may be practiced in other embodiments that deviate from the specific details disclosed herein.

Exemplary embodiments of the disclosure will be fully described below with reference to the drawings, but the disclosure may also be implemented in many different forms and should not be construed as limited to the embodiments described herein. In the drawings, sizes and thicknesses of various regions, parts and layers are not drawn to actual scale for clarity's sake. To facilitate understanding, the same components in the following description will be denoted by the same symbols.

Directional terms used herein (for example, up, down, right, left, front, back, top, bottom) are used only with reference to the drawings and are not intended to imply absolute orientation.

Unless otherwise defined, all terms (including technical and scientific terms) used herein have the same meaning as commonly understood by one of ordinary skill in the art to which this disclosure belongs.

The term "between" used to define a numerical range in this specification is intended to cover a range equal to and between an endpoint value and another endpoint value. For example, a size range between a first value and a second value means that the size range may cover the first value, the second value and any value between the first value and the second value.

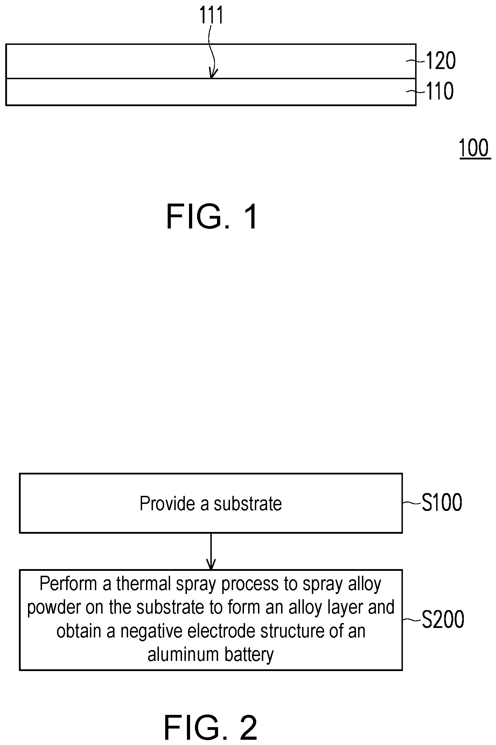

FIG. 1 is a schematic diagram of a negative electrode structure of an aluminum battery according to an embodiment of the disclosure. FIG. 2 is a flowchart of a manufacturing method of an aluminum battery according to an embodiment of the disclosure. Referring to FIG. 1, in the disclosure, the aluminum battery includes a negative electrode structure 100, and the negative electrode structure 100 includes a substrate 110 and an alloy layer 120, where the alloy layer 120 is located on the substrate 110. Here, the substrate 110 is a metal foil, and the metal foil is made of, for example, aluminum (Al), nickel (Ni), copper (Cu), titanium (Ti), or other suitable materials. Preferably, the metal foil is an aluminum foil or nickel foil, and a thickness of the substrate 110 ranges from 20 µm to 500 µm.

In addition, the alloy layer 120 includes an aluminum element and a non-aluminum element. The content of the aluminum element in the alloy layer 120 is greater than or equal to 85wt% and less than 100wt%, while the content of the non-aluminum element (for example, including silicon (Si), magnesium (Mg), nickel (Ni), copper (Cu), and zinc (Zn)) in the alloy layer 120 is less than or equal to 15 wt% and greater than 0 wt% (so that the alloy layer 120 may be regarded as an aluminum alloy layer). Accordingly, the disclosure uses the design of the alloy layer 120 to control the aluminum element and the non-aluminum element therein to be within the corresponding weight ratio ranges. In this way, the alloy layer 120 may be evenly formed on the negative electrode structure 100, so that the aluminum battery has better product competitiveness.

Furthermore, during the continuous charging and discharging process of the aluminum battery, the electrolyte may produce electrochemical deposition on the negative electrode through oxidation and reduction, and the substrate (such as metal aluminum foil) without the aluminum alloy layer formed thereon is easy to react with oxygen, causing the surface of the substrate to be covered with an oxide layer. In this way, the aforementioned oxide layer may slow down the electrochemical deposition on the surface of the negative electrode, reduce the electrochemical reaction capability of the negative electrode, and thus affect the performance of the aluminum battery. Therefore, the disclosure introduces the design of the aluminum alloy layer 120 that may reduce generation of the oxidation passivation layer, so as to improve electrochemical deposition reaction capability of the negative electrode structure 100, reduce a deterioration effect of the aforementioned oxidation passivation layer on the negative electrode structure 100, mitigate a problem of metal deposition in an isolation film, and significantly improve the performance of the aluminum battery. However, the disclosure is not limited thereto.

In some embodiments, when the non-aluminum element includes silicon (Si), magnesium (Mg), nickel (Ni), copper (Cu), zinc (Zn) or combinations thereof, where in the alloy layer 120 (the aluminum alloy layer), the content of silicon (Si) is about 0.01wt% to 12wt%, the content of magnesium (Mg) is about 0.01wt% to 8wt%, the content of nickel (Ni) is about 0.01wt% to 8wt%, and the content of copper (Cu) is about 0.01wt% to 8wt%, and the content of zinc (Zn) is about 0.01wt% to 8wt%.

In some embodiments, the alloy layer 120 is an aluminum-nickel alloy (92wt% aluminum and 8wt% nickel) or an aluminum-silicon alloy (88wt% aluminum and 12wt% Si), and these aluminum alloys may make the negative electrode structure 100 to have a better body surface area and anti-corrosion properties, and meanwhile make the aluminum battery to have high stability.

In addition, the alloy powder described herein may be made by any suitable method, which is not limited by the disclosure.

In the embodiment, the manufacturing method of the aluminum battery may include at least the following steps. Referring to FIG. 2, first, the substrate 110 is provided (step S100). Then, a thermal spray process is performed to spray aluminum alloy powder on the substrate 110 to form the alloy layer 120 and obtain the negative electrode structure 100 of the aluminum battery (step S200). Since the thermal spray process has fewer complicated steps and may quickly form the aluminum alloy layer 120 on the substrate 110 (rapid film formation), and the surface of the substrate 110 is heated less during the film formation process (such as less than 300°C, thus an intermetallic compound (IMC) 111 between the aluminum alloy layer 120 and the substrate 110 may be generated as shown in FIG. 1), and it is not likely to have adverse effects on the substrate 110, the aluminum alloy layer 120 formed by the thermal spray process may shorten a process time and save cost, and meanwhile improve the quality of the negative electrode structure 100, making the aluminum battery to have excellent product competitiveness.

Furthermore, the negative electrode structure 100 of the embodiment is combined with an aluminum ion electrolyte and a positive electrode system (such as graphite) to demonstrate an excellent charge and discharge performance of aluminum trivalent ions, and the embodiment uses aluminum powder to be sprayed and melted and sintered and stacked on the substrate (such as aluminum foil or nickel foil) to obtain the negative electrode structure 100. In this way, in addition to increasing a body surface area of the negative electrode, the aluminum alloy structure has excellent electrochemical stability, where the intermetallic compound 111 generated at the interface between the substrate 110 and the aluminum alloy layer 120 may effectively improve the charge and discharge performance of the aluminum battery. Therefore, the aluminum alloy layer 120 with a high body surface area is formed on the substrate 110, and the negative electrode structure 100 of the aluminum battery is obtained. In addition, an atomic lattice in the aluminum alloy layer 120 of the embodiment is suitable for entry and exit of aluminum ions, which may stabilize the charge and discharge performance, and the intermetallic compound 111 formed between the aluminum alloy layer 120 and the substrate 110 may prevent the aluminum alloy layer 120 from peeling off and improve cycle characteristics, and the aluminum alloy layer 120 may also effectively inhibit the electrolyte from forming an oxidation passivation layer on the negative electrode structure, such that the aluminum battery has product competitiveness.

In some embodiments, when the thermal spray process is performed, the aluminum alloy powder is composed of solid powder particles of the aluminum element and the non-aluminum element, i.e., after the thermal spray process is performed, the aluminum alloy powder is sintered on the substrate 110 to form the aluminum alloy layer 120 composed of solid powder particles of the aluminum element and the non-aluminum element, and since the thermal spray process does not adopt the method of first making a slurry (the slurry may include additives or binders or the like) and then coating and baking, the conductivity of the aluminum alloy layer 120 may be improved, such that the aluminum battery has more advantages in performance. The aforementioned solid powder particles may have different particle sizes. For example, an average particle size range in the aluminum alloy layer 120 is about 20 µm. Namely, the particle sizes of the aforementioned solid powder particles may be the same or different but are all within a range of 10 µm to 200 µm, but the disclosure is not limited thereto.

In addition, since the aluminum alloy powder is composed of solid powder particles, after the thermal spray process is performed, the aluminum alloy layer 120 may be formed through mutual melting and stacking of large and small particles. In other words, after the thermal spray process is performed, the aluminum alloy powder is staggered and stacked on the substrate 110 to form pores (high body surface area) in the aluminum alloy layer 120. In this way, the ability of the electrolyte entering the negative electrode structure 100 may be improved to increase a replenishment speed and an infiltration effect of the electrolyte, so as to improve the electrochemical reaction capability of the negative electrode structure 100, and accordingly improve power capacity performance of the aluminum battery, but the disclosure is not limited thereto.

In some embodiments, the thermal spray process uses a high-temperature heat source generated by combustion heat energy (flame and high-speed flame) or electrical energy (plasma and arc) to heat the aluminum alloy powder material to a semi-molten state, and then uses high-pressure gas to accelerate the semi-molten material to impact on the substrate 110, and forms the solid aluminum alloy layer 120 after cooling, so as to improve the adhesion of the alloy layer 120. Here, the high-pressure gas is, for example, nitrogen, argon or a mixed gas, and the process pressure is 1-20 kgf/mm². Here, the thermal spray process is a powder spray method (thermal method) or a post-processing process followed by thermal baking.

In some embodiments, a temperature range of the thermal spray process is between 1000°C and 2000°C, and the thermal spray process is carried out for a time between 10 seconds and 120 seconds, so as to better meet the requirements of rapid film formation characteristics and meanwhile reduce the requirements on the characteristics (such as requiring high temperature resistance, etc.) of the substrate 110, but the disclosure is not limited thereto.

In some embodiments, due to the better controllability and rapid film formation characteristics of the thermal spray process, a thickness of the aluminum alloy layer 120 may be controlled within a certain thickness range, which may effectively increase a volume energy density of the aluminum battery, and improve power capacity and performance. For example, the thickness of the alloy layer 120 ranges from 50 µm to 500 µm, and when the thickness of the aluminum alloy layer 120 is less than or equal to 100 µm, it has a better degree of thinning, but the disclosure is not limited thereto.

In some embodiments, before performing the thermal spray process, a surface treatment process is performed on the substrate, including a cleaning process and a roughening process, where the cleaning process may remove surface moisture through drying, remove grease by using organic solvents (such as ethanol and isopropyl alcohol, etc.), and remove dirt or similar contaminants by wiping or cleaning with an air gun, which may reduce probability of poor adhesion, and reduce impurities being coated between the substrate 110 and the aluminum alloy layer 120 and adversely affecting the interface (affecting IMC generation).

In some embodiments, before performing the thermal spray process, a surface roughening process is performed on the substrate, such as improving a surface roughness by grinding, brushing or sandblasting, so that the substrate 110 has a surface roughness (such as Ra is between 1 µm and 5 µm), thereby increasing a surface area, and when the semi-molten aluminum alloy powder hits the surface of the substrate 110, better mechanical engagement is achieved, where a bonding strength of the aluminum alloy spray coating is, for example, greater than 3 kgf/mm², and after appropriate post-processing (such as a baking process), the bonding strength may even reach 10kgf/mm², but the disclosure is not limited thereto.

In some embodiments, the aluminum battery includes a positive electrode, a negative electrode structure 100, an isolation film and an electrolyte, where the isolation film is located between the positive electrode and the negative electrode structure 100, the electrolyte is located between the positive electrode and the negative electrode structure 100, and the electrolyte may be aluminum halide and other ionic liquids may be selected. The isolation film includes glass fiber, but the disclosure is not limited thereto.

The disclosure does not limit other components of the aluminum battery (such as positive electrode, isolation film, and electrolyte) and its manufacturing method, as long as the negative electrode structure of the aluminum battery (electrolyte using aluminum-based ions) includes a substrate and an aluminum alloy layer, and the content of the aluminum element in the alloy layer is greater than or equal to 85wt% and less than 100wt%, while the content of the non aluminum element in the alloy layer is less than or equal to 15wt% and greater than 0wt% in the aluminum alloy layer, and as long as the thermal spray process is performed in the manufacturing method of the aluminum battery to spray the aluminum alloy powder on the substrate to form the aluminum alloy layer and obtain the negative electrode structure of the aluminum battery, it is considered to be within the scope of the disclosure, and detailed descriptions of other components (such as the positive electrode, the isolation film, and the electrolyte) are omitted in this specification so as not to obscure the understanding of various principles of the disclosure.

The effect of the disclosure will be described in more detail below with reference to the embodiments and comparative examples. In addition, although the following embodiments are described, details of used materials, processes, etc., may be appropriately changed without exceeding the scope of the disclosure. Therefore, the disclosure should not be interpreted restrictively by the examples described below.

### Comparative example 1

A metal aluminum foil was cut to obtain a negative electrode (thickness of 0.05 mm, size Φ14 mm). Graphite slurry was coated on the aluminum foil (thickness 0.05 mm, size Φ14 mm) to obtain a positive electrode. Then, the negative electrode, the isolation film (glass fiber filter paper (Chongqing Oleji Technology Co., Ltd., trade name: CY-H14)), and the positive electrode were sequentially arranged, and placed in an electrolytic cell rich in electrolyte (a molar ratio of aluminum chloride: 1-ethyl-3-methylimidazolium chloride is 1.3:1) to obtain the aluminum battery of the comparative example 1.

### Comparative example 2

Similar to the preparation method of the aluminum battery of the comparative example 1, except that the negative electrode was replaced with nickel foil to obtain the aluminum battery of the comparative example 2.

### Embodiment 1

Similar to the preparation method of the aluminum battery of the comparative example 1, except that the negative electrode was replaced with a negative electrode structure (which may correspond to the structure of FIG. 1A) using a thermal spray process to form an aluminum alloy layer on a substrate (aluminum foil), where a thickness of the aluminum alloy layer was 50 µm, the aluminum alloy powder used in the thermal spray process was aluminum-silicon alloy powder (Al: 96wt%; Si: 4wt%), a used high-pressure gas was nitrogen, a pressure was 6kgf/mm², and a process time was 60 seconds to obtain the aluminum battery of the embodiment 1.

### Embodiment 2

Similar to the preparation method of the aluminum battery of the embodiment 1, except that a different proportion of aluminum-silicon alloy powder (Al: 92wt%; Si: 8wt%) was used to obtain the aluminum battery of the embodiment 2.

### Embodiment 3

Similar to the preparation method of the aluminum battery of the embodiment 1, except that a different proportion of aluminum-silicon alloy powder (Al: 88wt%; Si: 12wt%) was used to obtain the aluminum battery of the embodiment 3.

### Embodiment 4

Similar to the preparation method of the aluminum battery of the embodiment 1, except that a different proportion of aluminum-silicon alloy powder (Al: 84wt%; Si: 16wt%) was used to obtain the aluminum battery of the embodiment 4.

### Embodiment 5

Similar to the preparation method of the aluminum battery of the comparative example 2, except that the negative electrode was replaced with a negative electrode structure (which may correspond to the structure of FIG. 1A) using a thermal spray process to form an aluminum alloy layer on a substrate (aluminum foil), where a thickness of the aluminum alloy layer was 50 µm, the aluminum alloy powder used in the thermal spray process was aluminum-silicon alloy powder (Al: 90wt%; Si: 10wt%), a used high-pressure gas was nitrogen, a pressure was 6kgf/mm², and a process time was 60 seconds to obtain the aluminum battery of the embodiment 5.

### Embodiment 6

Similar to the preparation method of the aluminum battery of the embodiment 1, except that the used aluminum alloy powder was aluminum-magnesium alloy powder (Al: 96wt%; Mg: 4wt%) to obtain the aluminum battery of the embodiment 6.

### Embodiment 7

Similar to the preparation method of the aluminum battery of the embodiment 6, except that a different proportion of aluminum-magnesium alloy powder (Al: 92wt%; Mg: 8wt%) was used to obtain the aluminum battery of the embodiment 7.

### Embodiment 8

Similar to the preparation method of the aluminum battery of the embodiment 6, except that a different proportion of aluminum-magnesium alloy powder (Al: 88wt%; Mg: 12wt%) was used to obtain the aluminum battery of the embodiment 8.

### Embodiment 9

Similar to the preparation method of the aluminum battery of the embodiment 5, except that the used aluminum alloy powder was aluminum-magnesium alloy powder (Al: 92wt%; Mg: 8wt%) to obtain the aluminum battery of the embodiment 9.

### Embodiment 10

Similar to the preparation method of the aluminum battery of the embodiment 1, except that the used aluminum alloy powder was aluminum-nickel alloy powder (Al: 96wt%; Ni: 4wt%) to obtain the aluminum battery of the embodiment 10.

### Embodiment 11

Similar to the preparation method of the aluminum battery of the embodiment 10, except that a different proportion of aluminum-nickel alloy powder (Al: 92wt%; Ni: 8wt%) was used to obtain the aluminum battery of the embodiment 11.

### Embodiment 12

Similar to the preparation method of the aluminum battery of the embodiment 10, except that a different proportion of aluminum-nickel alloy powder (Al: 88wt%; Ni: 12wt%) was used to obtain the aluminum battery of the embodiment 12.

### Embodiment 13

Similar to the preparation method of the aluminum battery of the embodiment 5, except that the used aluminum alloy powder was aluminum-nickel alloy powder (Al: 92wt%; Ni: 8wt%) to obtain the aluminum battery of the embodiment 13.

### Embodiment 14

Similar to the preparation method of the aluminum battery of the embodiment 1, except that the used aluminum alloy powder was aluminum-copper alloy powder (Al: 96wt%; Cu: 4wt%) to obtain the aluminum battery of the embodiment 14.

### Embodiment 15

Similar to the preparation method of the aluminum battery of the embodiment 14, except that a different proportion of aluminum-copper alloy powder (Al: 92wt%; Cu: 8wt%) was used to obtain the aluminum battery of the embodiment 15.

### Embodiment 16

Similar to the preparation method of the aluminum battery of the embodiment 14, except that a different proportion of aluminum-copper alloy powder (Al: 88wt%; Cu: 12wt%) was used to obtain the aluminum battery of the embodiment 16.

### Embodiment 17

Similar to the preparation method of the aluminum battery of the embodiment 5, except that the used aluminum alloy powder was aluminum-copper alloy powder (Al: 92wt%; Cu: 8wt%) to obtain the aluminum battery of the embodiment 17.

### Embodiment 18

Similar to the preparation method of the aluminum battery of the embodiment 1, except that the used aluminum alloy powder was aluminum-zinc alloy powder (Al: 96wt%; Zn: 4wt%) to obtain the aluminum battery of the embodiment 18.

### Embodiment 19

Similar to the preparation method of the aluminum battery of the embodiment 18, except that the used aluminum alloy powder was aluminum-zinc alloy powder (Al: 92wt%; Zn: 8wt%) to obtain the aluminum battery of the embodiment 19.

### Embodiment 20

Similar to the preparation method of the aluminum battery of the embodiment 18, except that the used aluminum alloy powder was aluminum-zinc alloy powder (Al: 88wt%; Zn: 12wt%) to obtain the aluminum battery of the embodiment 20.

### Embodiment 21

Similar to the preparation method of the aluminum battery of the embodiment 5, except that the used aluminum alloy powder was aluminum-zinc alloy powder (Al: 92wt%; Zn: 8wt%) to obtain the aluminum battery of the embodiment 21.

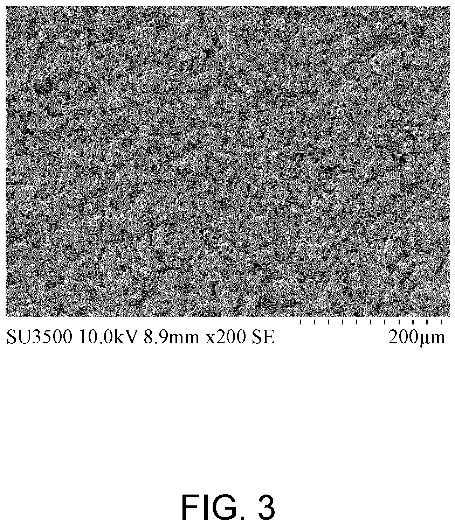

The aluminum batteries of the above embodiments and comparative examples were respectively subjected to 100 cycles of charge and discharge tests at two different C rates of 1C and 3C (a difference in performance between slow and fast charge and discharge), and power capacities (mAh/g) and charge and discharge efficiencies (%) of the two different C rates were compared, and the difference between reactivity (power capacity) and charge and discharge efficiency (CE) may be seen, as shown in Table 1. It may be seen from Table 1 that the aluminum batteries in the embodiment are superior to the comparative example in terms of power capacity and charge and discharge efficiency. Namely, the disclosure confirms that by introducing the aluminum alloy layer (such as aluminum silicon alloy, aluminum magnesium alloy, aluminum nickel alloy, aluminum copper alloy, and aluminum zinc alloy) with the content of the aluminum element greater than or equal to 85wt% and less than 100wt%, and the content of the non aluminum element less than or equal to 15wt% and greater than 0wt%, the aluminum batteries may have excellent product competitiveness. In addition, it may be confirmed from FIG. 3 that in a microstructure, compared with a planar metal foil (before spraying), after spraying, it may be observed that the sprayed alloy presents a powder accumulation state (the surface becomes a porous structure with particle accumulation). Therefore, a body surface area is higher than the original plane, which also means that the area in contact with the electrolyte becomes higher, providing more reaction points. In other words, it helps to improve contact and infiltration between the electrode and the electrolyte, which increases the reaction points and thereby improving the reactivity.

It should be noted that in the composition design of the aluminum-nickel alloy coating, electrical properties and corrosion resistance may be improved by adding nickel. However, adding nickel may increase a melting point of the aluminum alloy, resulting in incomplete melting during the spraying process, which results in adhesion decrease to affect spraying quality. Therefore, the nickel content of the composition design of the aluminum-nickel alloy coating is preferably less than 8wt% of the embodiment 11 and embodiment 13, but the disclosure is not limited thereto. Furthermore, the composition design of the aluminum-silicon alloy coating may improve a coating bonding strength and electrical effect by adding silicon. However, adding silicon may lower the melting point of the aluminum alloy, causing the temperature to be too high during the spraying process, resulting in complete melting or even scorching of the powder, and resulting in poor spraying quality. Therefore, the silicon content in the composition design of the aluminum-silicon alloy coating is preferably less than 12wt% of the embodiment 3, but the disclosure is not limited thereto.

**Table 1**

| | Power capacity (mAh/g)(1C) | Charge discharge efficiency (%)(1C) | Power capacity (mAh/g)(3C) | Charge discharge efficiency (%)(3C) |
|---|---|---|---|---|
| Embodiment 1 | 361 | >90 | 355 | >90 |
| Embodiment 2 | 428 | >90 | 403 | >90 |
| Embodiment 3 | 430 | >90 | 411 | >90 |
| Embodiment 4 | 410 | >90 | 393 | >90 |
| Embodiment 5 | 465 | >90 | 455 | >90 |
| Embodiment 6 | 208 | >90 | 188 | >90 |
| Embodiment 7 | 256 | >90 | 214 | >90 |
| Embodiment 8 | 212 | >90 | 198 | >90 |
| Embodiment 9 | 270 | >90 | 241 | >90 |
| Embodiment 10 | 308 | >90 | 297 | >90 |
| Embodiment 11 | 377 | >90 | 370 | >90 |
| Embodiment 12 | 344 | >90 | 310 | >90 |
| Embodiment 13 | 390 | >90 | 388 | >90 |
| Embodiment 14 | 260 | >90 | 228 | >90 |
| Embodiment 15 | 336 | >90 | 321 | >90 |
| Embodiment 16 | 323 | >90 | 300 | >90 |
| Embodiment 17 | 358 | >90 | 335 | >90 |
| Embodiment 18 | 388 | >90 | 367 | >90 |
| Embodiment 19 | 462 | >90 | 443 | >90 |
| Embodiment 20 | 292 | >90 | 266 | >90 |
| Embodiment 21 | 429 | >90 | 400 | >90 |
| Comparative example 1 | 132 | >70 | 116 | >60 |
| Comparative example 2 | 158 | >70 | 122 | >70 |

Other unspecified compositions and specifications of the aluminum battery should be obtained by those of ordinary skill in the field to which the disclosure belongs based on any content that is included in the spirit and scope of the accompanying patent application.

In summary, the disclosure uses the design of the aluminum alloy layer to control the aluminum element and the non-aluminum element within a corresponding weight ratio range. In this way, the alloy layer may improve charge and discharge cycle characteristics and effectively inhibit formation of an oxide passivation layer on the negative electrode structure, such that the aluminum battery has better product competitiveness. In addition, the thermal spray process has fewer complicated steps and may effectively increase a film formation speed, and since a surface of the substrate is less heated during the film forming process, the thermal spray process is less likely to have adverse effects on the substrate. Therefore, the aluminum alloy layer formed by the thermal spray process may optimize the quality of the negative electrode structure and enable the aluminum battery to have excellent electrochemical application service life.

### Reference Sign List

100: negative electrode structure
110: substrate
111: intermetallic compound
120: aluminum alloy layer
S100, S200: step

## Claims

1. An aluminum battery, comprising:
a negative electrode structure (100), comprising:
a substrate (110); and
an aluminum alloy layer (120), located on the substrate (110), wherein the aluminum alloy layer (120) comprises an aluminum element and a non-aluminum element, a content of the aluminum element in the aluminum alloy layer (120) is greater than or equal to 85wt% and less than 100wt%, while a content of the non-aluminum element in the aluminum alloy layer (120) is less than or equal to 15wt% and greater than 0wt%.

2. The aluminum battery as claimed in claim 1, wherein the non-aluminum element comprises silicon (Si), magnesium (Mg), nickel (Ni), copper (Cu), zinc (Zn) or combinations thereof.

3. The aluminum battery as claimed in claim 1, wherein a thickness of the aluminum alloy layer (120) ranges from 50 µm to 500 µm.

4. The aluminum battery as claimed in claim 1, wherein the aluminum alloy layer (120) is composed of solid alloy powder particles of the aluminum element and the non-aluminum element.

5. The aluminum battery as claimed in claim 4, wherein an average particle size of the solid alloy powder particles ranges from 10 µm to 200 µm.

6. A manufacturing method of an aluminum battery, comprising:
providing a substrate (110); and
performing a thermal spray process to spray aluminum alloy powder on the substrate (110) to form an aluminum alloy layer (120) and obtain a negative electrode structure (100) of the aluminum battery.

7. The manufacturing method of the aluminum battery as claimed in claim 6, wherein after performing the thermal spray process, the aluminum alloy powder is melted and sintered and stacked on the substrate (110).

8. The manufacturing method of the aluminum battery as claimed in claim 6, wherein after performing the thermal spray process, the aluminum alloy powder is staggered and stacked on the substrate (110).

9. The manufacturing method of the aluminum battery as claimed in claim 6, wherein a temperature range of the thermal spray process is 1000°C to 2000°C, and the thermal spray process is performed for 10 seconds to 120 seconds.

10. The manufacturing method of the aluminum battery as claimed in claim 6, wherein before performing the thermal spray process, the method further comprises performing a surface treatment process on the substrate (110).
